# EUROPEAN PATENT APPLICATION

(11) **EP 4 618 551 A1**
(43) Date of publication of application: **17.09.2025**
(21) Application number: 23888090.0
(22) Date of filing: 09.11.2023
(51) Int. Cl.: H04N 21/2187

(54) **LIVE BROADCAST INTERACTION METHOD AND APPARATUS, ELECTRONIC DEVICE AND COMPUTER-READABLE STORAGE MEDIUM**

(30) Priority: 10.11.2022 CN 202211407217
(71) Applicant: Beijing Zitiao Network Technology Co., Ltd., Beijing 100190 (CN)
(72) Inventor: XING, Duolai, Beijing 100028 (CN)
(74) Representative: Isarpatent
(86) International application number: PCT/CN2023/130844
(87) International publication number: WO 2024/099405

(57) **Abstract**

Embodiments of the present disclosure provide a method and an apparatus for live streaming interaction, an electronic device, and a computer-readable storage medium. The method may include: displaying a select control for supporting a user in selecting a target participant from a plurality of participants, where the plurality of participants are participants associated with a live streaming event in a live streaming channel; displaying, in response to receiving a user selection for the select control, a plurality of participant icons of the plurality of participants; associating a user account of the user with the target participant in response to receiving a user selection for the target participant among the plurality of participants; and displaying a user input of the user in association with the target participant in a live streaming interface. According to embodiments of the present disclosure, users can select indicated participants based on their own preferences, thereby enhancing their enthusiasm for watching the match and enriching the ways of interaction, thus improving the user experience.

## Description

### CROSS-REFERENCE TO RELATED APPLICATION(S)

The present application claims the benefit of Chinese Patent Application No. 202211407217.5, filed on November 10, 2022. The above application is incorporated herein by reference in its entirety.

### FIELD

Embodiments of the present disclosure relate to the field of Internet technologies, and more particularly, to a live streaming interaction method and an apparatus, an electronic device, and a computer-readable storage medium.

### BACKGROUND

With the rapid development of the Internet, live streaming has gradually become a new way of information exchange. Through live streaming, various types of activities, such as shopping, entertainment, and learning, can be carried out. During a live stream, a live viewer can interact with a streamer.

During traditional event live streaming, such as sports event live streaming, a user can only interact with other users and the streamer through text comments. The traditional form of interaction is monotonous and fails to immerse the user in the atmosphere of the match. Therefore, there is a need for an improved event live streaming solution.

### SUMMARY

Embodiments of the present disclosure provide a solution of live streaming interaction.

According to a first aspect of the present disclosure, a method for live streaming interaction is provided. The method may include: displaying a select control for supporting a user in selecting a target participant from a plurality of participants, where the plurality of participants are participants associated with a live streaming event in a live streaming channel; displaying, in response to receiving a user selection for the select control, a plurality of participant icons of the plurality of participants; associating a user account of the user with the target participant in response to receiving a user selection for the target participant among the plurality of participants; and displaying a user input of the user in association with the target participant in a live streaming interface.

According to a second aspect of the present disclosure, an apparatus for live streaming interaction is provided. The apparatus may include: a first display module configured to display a select control for supporting a user in selecting a target participant from a plurality of participants, where the plurality of participants are participants associated with a live streaming event in a live streaming channel; a second display module configured to display, in response to receiving a user selection for the select control, a plurality of participant icons of the plurality of participants; a participant association module configured to associate a user account of the user with the target participant in response to receiving a user selection for the target participant among the plurality of participants; and a third display module configured to display a user input of the user in association with the target participant in a live streaming interface.

According to a third aspect of the present disclosure, an electronic device is provided. The electronic device includes: a processor; and a memory coupled to the processor, where the memory has instructions stored therein that, when executed by the processor, cause the electronic device to perform actions including: displaying a select control for supporting a user in selecting a target participant from a plurality of participants, where the plurality of participants are participants associated with a live streaming event in a live streaming channel; displaying, in response to receiving a user selection for the select control, a plurality of participant icons of the plurality of participants; associating a user account of the user with the target participant in response to receiving a user selection for the target participant among the plurality of participants; and displaying a user input of the user in association with the target participant in a live streaming interface.

According to a fourth aspect of the present disclosure, there is provided a computer program product tangibly stored on a computer-readable medium and including machine-executable instructions that, when executed, cause a machine to perform any step of the method according to the first aspect.

This section is provided to introduce a selection of concepts in a simplified form, which will be further described in the detailed description below. This section is neither intended to identify key features or principal features of the present disclosure, nor to limit the scope of the present disclosure.

### BRIEF DESCRIPTION OF THE DRAWINGS

The above and other objectives, features, and advantages of the present disclosure will become more apparent from the more detailed description of exemplary embodiments of the present disclosure in conjunction with the accompanying drawings. In the exemplary embodiments of the present disclosure, the same or similar reference numerals generally represent the same or similar components. In the figures:
FIG. 1 is a schematic diagram of an example environment in which a plurality of embodiments of the present disclosure can be implemented;
FIG. 2 is a flowchart of a process for live streaming interaction according to an embodiment of the present disclosure;
FIGS. 3A to 3G are schematic diagrams of graphical user interfaces of an activity interface according to an embodiment of the present disclosure;
FIGS. 4A to 4H are schematic diagrams of graphical user interfaces of a live streaming interface according to an embodiment of the present disclosure;
FIG. 5 is a schematic diagram of an apparatus for live streaming interaction according to an embodiment of the present disclosure; and
FIG. 6 is a schematic block diagram of an example device that may be used to implement the embodiments of the present disclosure.

### DETAILED DESCRIPTION OF EMBODIMENTS

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a select control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that meet the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

The principles of the present disclosure will be described below with reference to several example embodiments shown in the accompanying drawings.

In the description of the embodiments of the present disclosure, the term "include" and similar terms should be understood as open-ended inclusion, namely, "including but not limited to". The term "based on" should be understood as "at least partially based on". The term "an embodiment" or "the embodiment" should be understood as "at least one embodiment". The terms "first", "second", etc. may refer to different objects or the same object. Other explicit and implicit definitions may be included below.

As described above, there is a need for an improved event live streaming solution. During traditional event live streaming, users can only interact with other users and the streamer through text comments when watching the live stream. Such a simple live streaming manner makes the users feel less connected to the match and cannot provide the same immersive experience of watching the match as field audiences.

According to an embodiment of the present disclosure, a solution for live streaming interaction is provided. This solution allows a user to select a target participant he or she supports in an interface related to a match activity. After the user selects the target participant, various elements of the target participant may be associated with the user input in the live streaming interface, causing the user feel more immersive to improve the user's perception and viewing experience of the match. Further, it also enriches the ways of interaction and improves the user experience, thereby solving the above problems and/or other potential problems.

The embodiments of the present disclosure are described in detail below in conjunction with example scenarios. It should be understood that this is merely for the purpose of illustration and is not intended to limit the scope of the present disclosure in any manner.

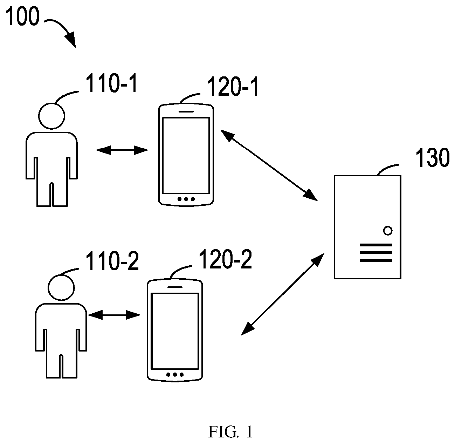

FIG. 1 is a schematic diagram of an example environment 100 in which the embodiments of the present disclosure can be implemented. It should be understood that the environment 100 shown in FIG. 1 is merely an example in which the embodiments of the present disclosure can be implemented, and is not intended to limit the scope of the present disclosure. The embodiments of the present disclosure are equally applicable to other systems or architectures.

As shown in FIG. 1, the environment 100 may include a plurality of users 110-1 and 110-2 (hereinafter referred to as a user 110), terminal devices 120-1 and 120-2 (hereinafter referred to as a terminal device 120), and a server 130. The terminal device 120 and the server 130 are connected via a network, for example, connected via a wired or wireless network, or the like.

The terminal device 120 includes, but is not limited to, a mobile terminal and a fixed terminal. For example, the mobile terminal includes, but is not limited to, a smart phone, a smart watch, a tablet computer, a laptop, a smart car-mounted terminal, and the like, and the fixed terminal includes, but is not limited to, a desktop computer, a smart TV, and the like.

The server 130 may be a stand-alone physical server, or a server cluster or a distributed system consisting of a plurality of physical servers, or a cloud server that provides basic cloud computing services, such as cloud services, cloud databases, cloud computing, cloud functions, cloud storage, network services, cloud communication, middleware services, domain name services, security services, and big data and artificial intelligence platforms. The live streaming interaction method according to this embodiment of the present disclosure may be implemented by the terminal device 120, or may be implemented jointly by the terminal device 120 and the server 130, which is not limited herein in the present disclosure.

The terminal device 120 may be a terminal on which the client of the user is located, and is used for displaying an activity interface associated with a match, for example, a live streaming interface and a match activity interface. The client may be various programs on different types of terminal devices 120, for example, various types of applications in smart phones and tablets. The application may be an application that includes a video playback function, including, but not limited to, a short video application, a music application, a social networking application, a news application, a forum application, a cloud disk storage application, and so on. The client may also be various software programs, web pages, and the like in a computer. This is not limited herein in the present disclosure.

The match activity interface and the live streaming interface in the client may include a live streaming image display area and various controls. The control may be a button that triggers an event in response to receiving a user input (e.g., tap, slide, swipe, air gesture control, and the like). The event may be selecting to join a target participant, redirecting to other interfaces, and the like. In some embodiments, the user may tap a select control to join a participant he or she supports. In some embodiments, the user may tap a redirect control to redirect to other user interfaces.

Embodiments of the present disclosure will be described from the perspective of an apparatus for live streaming interaction, which may be specifically integrated in a server or a terminal. For convenience, the following description will be provided from the perspective of the terminal device 120.

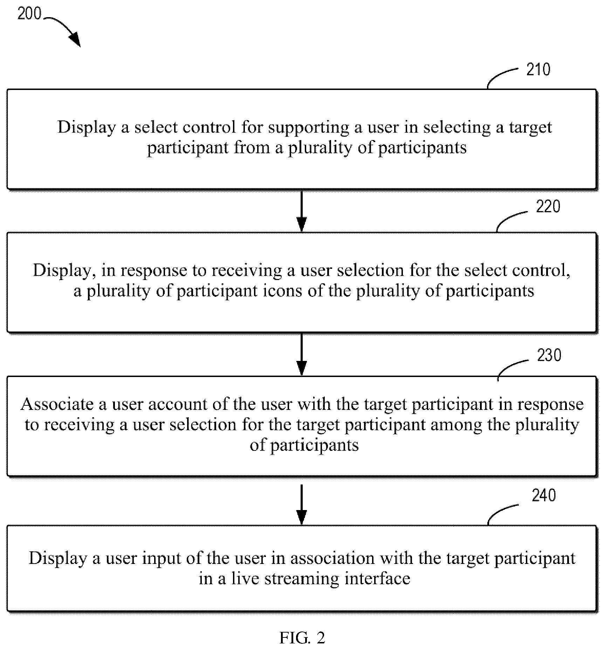

The process of live streaming interaction will be described in detail below with reference to FIG. 2. FIG. 2 is a flowchart of a process 200 for live streaming interaction according to an embodiment of the present disclosure. In some embodiments, the process 200 may be implemented in the terminal device 120 and the server 130 in FIG. 1. The specific examples mentioned in the following description are all exemplary and are not intended to limit the scope of protection of the present disclosure.

In the following description, for ease of understanding and description, the description will be provided in conjunction with a football match, and the participants are, for example, different teams in the football match. However, it can be understood that a participant may also be any object associated with the live stream. For example, a streamer participating in a PK with microphone may be regarded as a participant, a contestant participating in a talent show may be regarded as a participant, or an item participating in a work evaluation may be regarded as a participant, which is not limited herein in the present disclosure.

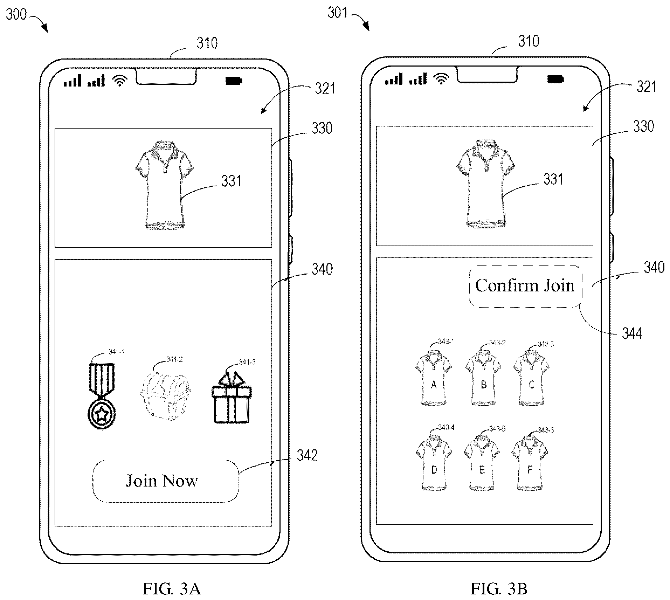

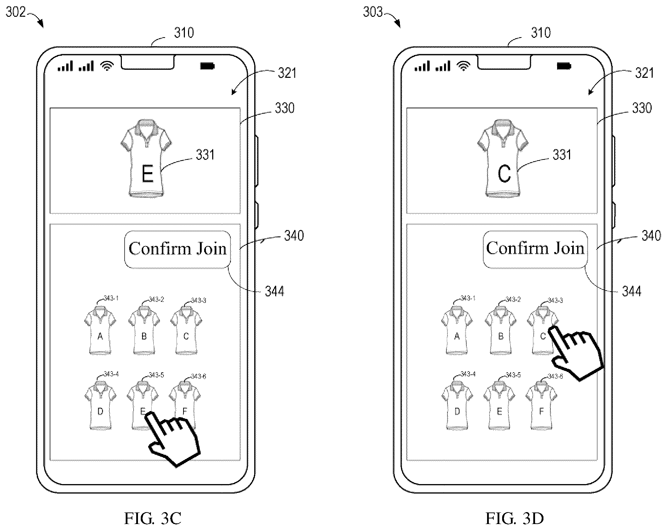

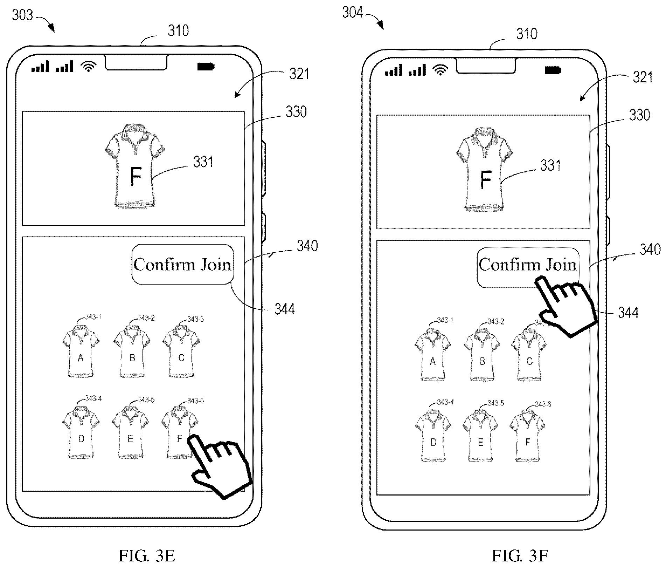

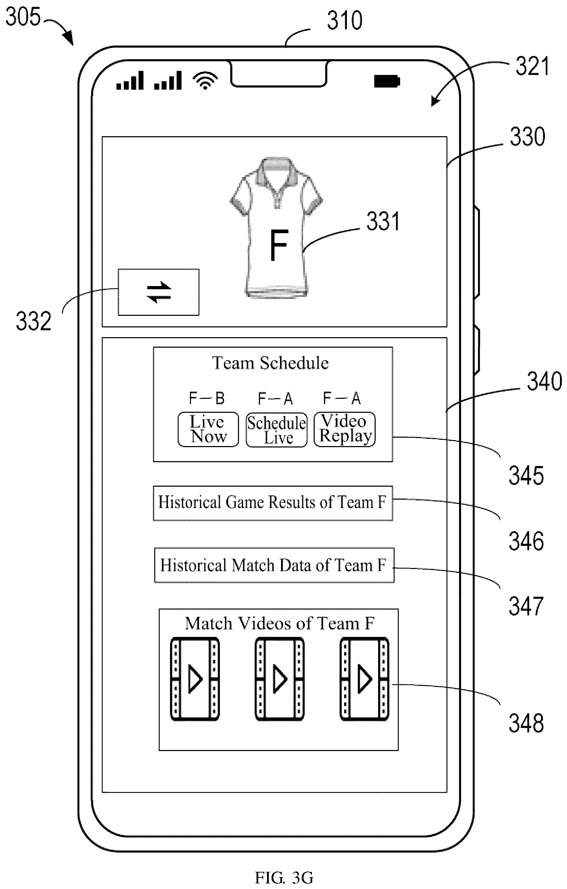

At 210, the terminal device 120 may display a select control for supporting a user in selecting a target participant from a plurality of participants, and the plurality of participants are participants associated with a live streaming event in a live streaming channel. For example, in response to determining that the user 110 has selected to enter an interface associated with the match event, the terminal device 120 displays a "To Join" button or another type of graphic icon in the interface to guide the user to join and support a target participant. This will be described in further detail below with reference to FIGS. 3 to 4. A live streaming event herein may refer to a live stream of a match between participants, but it can be understood that the live streaming event may also be a post-match interview of the participants, and the like, which is not limited herein in the present disclosure.

At 220, the terminal device 120 may display, in response to receiving a user selection for the select control, a plurality of participant icons of the plurality of participants. For example, when determining that the user has tapped on the "To Join" button displayed in the user interface, the terminal device 120 displays team flags (e.g., flags of the countries or regions to which the teams belong) and team uniforms of a plurality of participants to the user for further selection by the user. This will be described in further detail below with reference to FIGS. 3 to 4.

At 230, the terminal device 120 associates a user account of the user with the target participant in response to receiving a user selection for the target participant among the plurality of participants. For example, when determining that the user 110 has selected the target participant, the terminal device 120 associates a user ID with the target participant. The target participant may represent a participant supported by the user 110. That is, the user hopes that the participant will achieve a better ranking or score more goals in the match. The association of the user ID with the target participant means that, for example, if the user selects to support a participant A in the activity interface, the user is also associated with the participant A in the live streaming interface. That is, in the client, as long as the user has selected a target participant in one interface, the user is bound to the target participant in other interfaces. This eliminates the need for the user to repeatedly select the supported participant in different interfaces, thereby improving the user experience. This will be described in further detail below with reference to FIGS. 3 to 4.

At 240, the terminal device 120 displays a user input of the user for the live streaming interface in association with the target participant in the live streaming interface. For example, if the user 110 has selected a target participant, when the user posts a comment in the live streaming channel, a badge of the target participant, such as the team uniform or team flag of the participant, will appear near text of the comment to display the participant supported by the user to other users. If a predetermined condition is met, the user may also send an emoji and a gift that are associated with the target participant, such as an exclusive emoji and an exclusive gift. It can be understood that the live streaming interaction form described above allows the user to express their emotions at any time while watching the match and interacting with other users who support the same or different participants, thereby significantly improving the user's sense of watching the match, making the user feel as if they are in the real football pitch. This will be described in further detail below with reference to FIGS. 3 to 4.

The process of how the user selects a target participant is described above. How the user selects a target participant in different match activity interfaces, and the interaction of the user in the live streaming interface after selecting the target participant will be described below with reference to FIGS. 3 to 4. For ease of understanding, the following description is provided with reference to a football match. It can be understood that the match may be of various types, which is not limited herein in the present disclosure.

### Activity Interface

FIGS. 3A to 3G are schematic diagrams of a graphical user interface 321 of a match activity interface according to an embodiment of the present disclosure. Although the terminal device 120 is illustrated herein as a smart phone 310, the terminal device 120 may also be other devices, which is not limited herein in the present disclosure.

First, referring to FIG. 3A, in response to the user 110 having selected to enter the activity interface but not yet selected the target participant, the terminal device 120 displays an initial activity interface, wherein the initial activity interface includes a first area 330 and a second area 340. The first area includes an initial participant icon. This participant icon may be, for example, a jersey, and the initial participant icon may be, for example, a white jersey, which may have various special effects that attract the user. The background of the first area may be a locker room background. It can also be understood that, since different clients have different functions, the different clients may support different benefits, which is not limited herein in the present disclosure.

The second area 340 may include a select control 342, and benefit icons 341-1, 341-2, 341-3, and so on (collectively referred to as benefit icons 341 hereinafter). The benefit icons indicate the benefits that the user can obtain after selecting a participant. It can be understood that the icons are not limited to the three benefit icons shown in the figure, but may also include other benefits, which support left and right swiping in the user interface for the user to view. Although six participants are shown in the figure, it can be understood that there may be other numbers of participants, for example, 32 participants. Displaying the benefit icons in the initial interface may attract the user to participate in the live streaming event, thereby improving the user experience.

In some embodiments, the benefit icons may include an icon, an emoji, a gift, or a chat channel that are associated with the target participant, for example, an exclusive icon, an exclusive emoji, an exclusive gift, or an exclusive chat channel. The exclusive chat channel means that, during the match live streaming of the target participant, the user can discuss the match with other users who have selected the same target participant. The exclusive icon means that the comments posted in the live streaming channel may be added with a home team badge (for example, the jersey and team flag of the participant). The exclusive gift means that the user may send the exclusive gift during the match of the target participant. The exclusive emoji means that the user may send the exclusive emoji during the match of the target participant. It can be understood that the benefit icons 341 displayed in the interface will attract the user to join the target participant, which also improves the user's sense of engagement.

In some embodiments, the above benefits may also include resources that the user can obtain after having selected to support the target participant. For example, the user will automatically obtain resources after the target participant scores a goal. The resources may be used to switch between participants during the match or redeem rewards after the activity. The resources will be further described below.

With continued reference to FIG. 3B, when determining that a user selection for the select control is received, the terminal device 120 displays a plurality of participant icons 343-1 to 343-6 (collectively referred to as participant icons 343 hereinafter) of a plurality of participants, and a confirm join control 344 in the second area 340. The dashed line indicates that it cannot be selected, because the user has not yet selected any participant icon 343.

Continue to refer to FIG. 3C. When determining that a user selection for a corresponding participant icon among the plurality of participant icons is received, the terminal device 120 switches to display the corresponding participant icon in the first area 330. For example, when the user taps on the participant icon 343-5, the terminal device 120 switches to display the icon of a participant E in the first area. It can be understood that the join control 340 changes to a solid line at this time. In FIG. 3D, after the user 110 taps on the participant icon 343-3, the terminal device 120 switches to display the icon of a participant C in the first area. Switching to display the team uniform of the target participant in the first area enables the user to view the details of the team more clearly, making it easier for the user to make a final selection, thereby improving the user experience.

In FIGS. 3E and 3F, after the user 110 finally taps on the participant icon 343-6, the terminal device 120 switches to display the icon of a participant F in the first area. The user then taps the confirm join control 344, so that the terminal device 120 receives the user's selection of the participant F. At this time, the terminal device 120 displays a "join successful" prompt (not shown) in the user interface, and associates the user account of the user with the participant F.

Continue to refer to FIG. 3G. At least one of a live streaming event schedule, historical live streaming event data, or a historical video of the participant F is displayed in the second area 340 after associating the user account of the user with the participant F. For example, as shown in FIG. 3G, the terminal device 120 displays a participant schedule 345, historical match results 346, historical match data 347, or match video 348. Although the above information is shown in the figure, it can be understood that one or more of them may be displayed, or other information may be displayed, for example, according to the user setting, which is not limited herein in the present disclosure. Displaying the above information after the user selects the target participant can facilitate the user's arrangement of his or her own match viewing, thereby further improving the user experience.

The participant schedule 345 displays all match information of the team F. In some embodiments, the terminal device 120 determines that the participant F is playing a match and displays a live streaming entry control, and the live streaming entry control is used to trigger entry into the live streaming channel where the match is played. For example, a "Live Now" control in FIG. 3G may be tapped on to open the live streaming channel where the match between the team F and a team B is being played. Alternatively, in some embodiments, when determining that the participant F will have a match with a team A in the future, then the terminal device 120 displays a "Reservation Live" control. The "Reservation Live" control may be tapped on to change to a "Reserved" state, or tapped on again to change to a "Cancel Reservation" state. Additionally, or alternatively, the terminal device 120 determines a historical match between the participant F and the participant A and presents a "Video Replay" control. Displaying the live streaming entry can facilitate the user's redirection between different interfaces, which reduces the user's operation steps, thereby improving the user experience.

The historical match data 347 may be displayed with static data performance of the team F, for example, goals scored, shots taken, assists made, possession percentage, and the like.

The match videos 348 may include match videos associated with the team F. In some embodiments, the video priority of the video displayed by the terminal device 120 may be determined according to the following order: popular videos of the current match (i.e., videos related to the live streaming event) > popular videos of previous matches > historical popular videos of the participant F (or a particular star within the participant). In some embodiments, the video displayed by the terminal device 120 may be originated from the video content of the live streaming channel of the current match or the historical video of the previous matches.

It can be understood that when a user selects a supported target participant in the main activity interface of the match, the participant schedule displayed in the user interface can help the user better plan his or her viewing time. In addition, historical match results and match data can help the user better analyse the target participant and decide whether to continue supporting the participant or change the participant to obtain more resources (such as points). The following will describe how the user changes the supported participant.

As shown in FIG. 3G, after the user selects the supported target participant, the terminal device 120 displays, in the user interface, a switch control 332 for supporting the user to reselect the participant. The terminal device 120 then displays a similar interface as shown in FIGS. 3E and 3F for the user to reselect the participant.

In one example, the user needs to consume resources to change the supported participant. In some embodiments, in response to receiving a user selection for a participant icon of another participant among the plurality of participants and to a resource amount associated with the user account being greater than a threshold resource amount, the terminal device 120 associates the user with the another participant, and then updates the resource amount associated with the user account to the resource amount minus the threshold resources. After association, the displayed user interface displays information such as the participant schedule, match results, and the like associated with the another participant, as shown in FIG. 3G.

The resources herein may refer to points. For example, when the performance of the participant selected by the user in the live streaming event meets a predetermined condition, the user may obtain points. Just as an example, the user may obtain 10 points after the target participant scores a goal, and may obtain 20 points after the target participant wins the match, and the like. The points herein are merely exemplary, and the resources may also be other virtual or real objects, which is not limited herein in the present disclosure. Updating the resource amount in the user account based on the performance of the target participant can improve the user's sense of engagement, thereby improving the user experience.

Alternatively, in some embodiments, the terminal device 120 displays, in response to receiving a user selection for a participant icon of another participant among the plurality of participants and to resources associated with the user account being less than threshold resources, a prompt indicating that the resources are insufficient for reselecting a participant, and the terminal device 120 displays an activity of obtaining resources and a redirect control associated with the activity, wherein the redirect control is used to trigger display of a user interface for the activity. It can be understood that the activity here refers to an activity that can increase the resources of the user account. The activity may be of various types, so as to help the user better engage with and participate in the ongoing live streaming event while obtaining resources (points). This can improve the user experience.

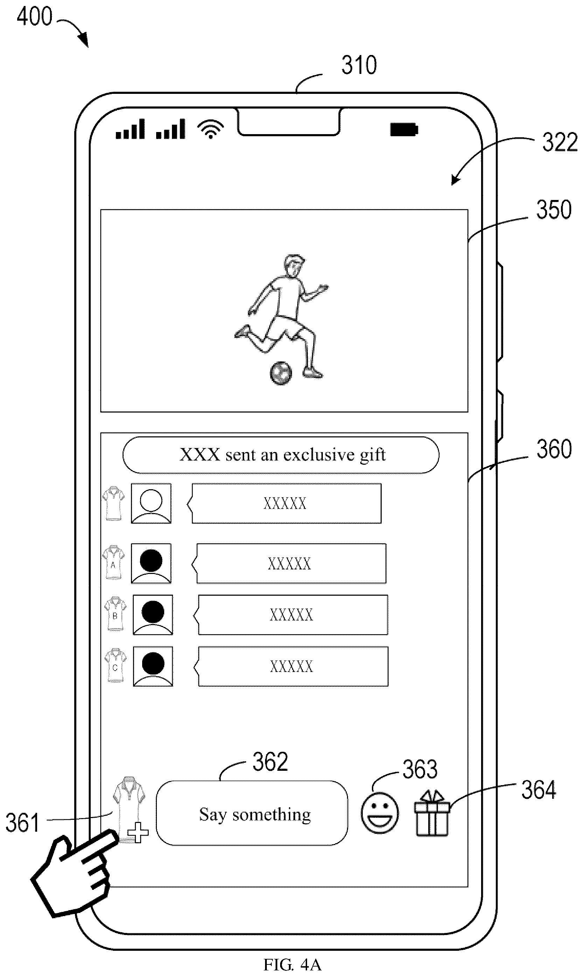

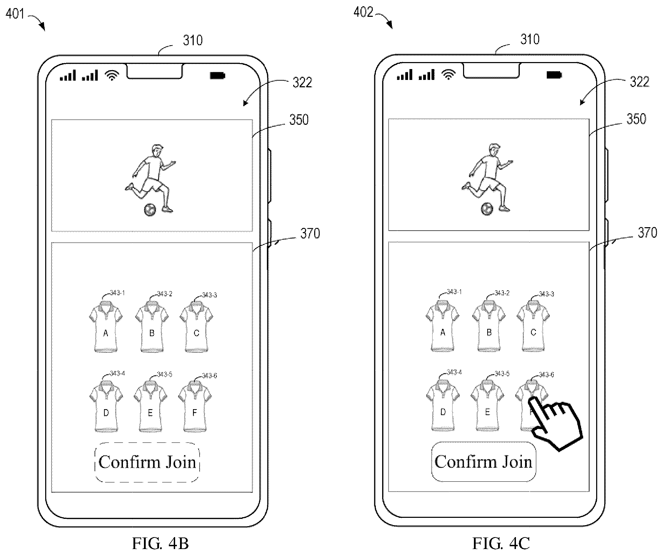

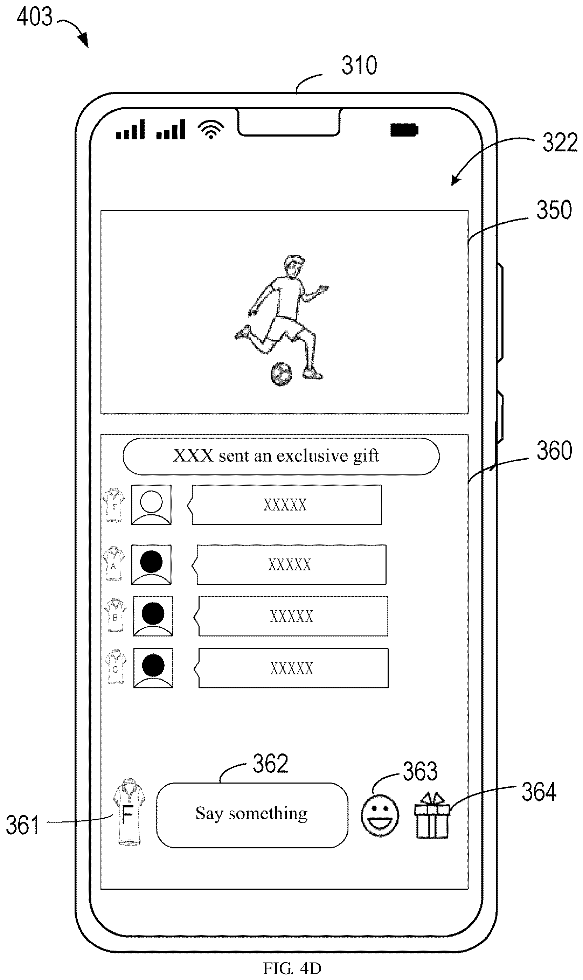

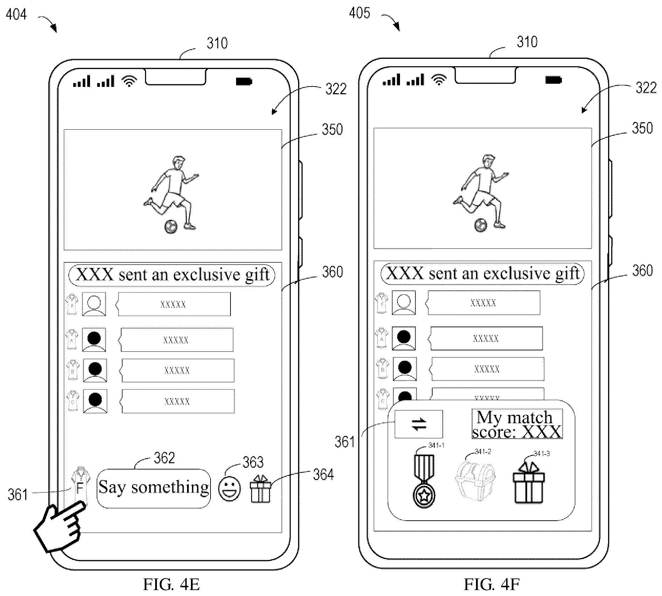

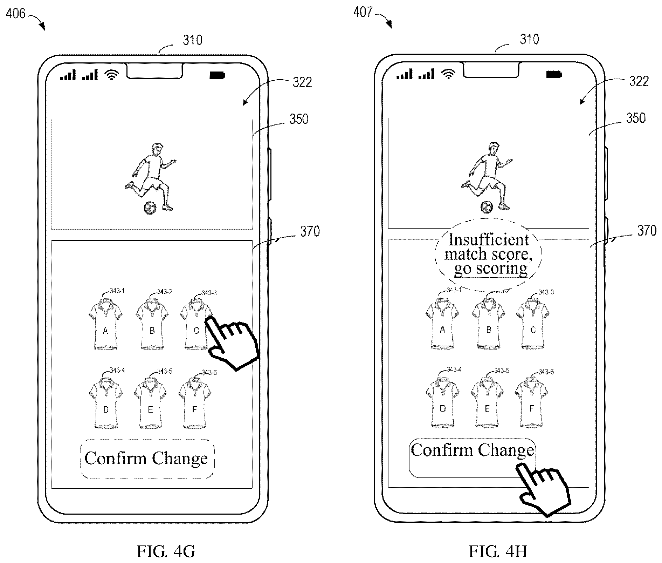

The process of how to select a target participant in a main activity interface of match is described above with reference to FIG. 3. The following will describe the process of how to select a target participant in a live streaming interface with reference to FIG. 4.

### Live Streaming Interface

FIGS. 4A to 4H are schematic diagrams of graphical user interfaces 322 of a live streaming interface according to an embodiment of the present disclosure.

First, referring to FIG. 4A, the terminal device 120 displays, in response to a user having selected to enter the live stream, a live streaming interface to the user, wherein the live streaming interface includes a live streaming image display area 350, a comment display area 360, and interaction controls, where the interaction controls include a select control 361, and further include at least one of a comment input control 362, a gift control 363, or an emoji control 364. It can be understood that the comment input control 362, the gift control 363, and the emoji control 364 have similar functions as those in a traditional live streaming channel, which will not be repeated herein.

It can be seen, the select control 361 is illustrated by a default blank jersey and a plus sign. This indicates that the user has not yet selected a supported target participant. At this time, when a user posts a comment in the live streaming channel, the user's avatar will be preceded by a default blank jersey, as also seen in the first line of comments in the comment display area 360.

With continued reference to FIG. 4B, the terminal device 120 displays, in response to receiving a user selection for the select control 361, the plurality of participant icons 343 of the plurality of participants and a "Confirm Join" control in an area 370 in the live streaming interface other than the live streaming image display area 350. It can be understood that the process of the user's selection of a participant is similar to that described above with respect to the "main activity page". The difference lies in that the dynamic jersey icon is no longer displayed, in order to avoid disrupting the user's view of the match live streaming image.

After the user selects and confirms joining the target participant (e.g., the participant F), the terminal device 120 replaces the select control 361 with the icon of the participant F, which in the figure is the jersey of the participant F (and may also include the team flag of the participant F). In some embodiments, in response to receiving a message that is input by the user for the comment input control 362, the terminal device 120 displays an icon of the target participant in association with the message in the comment display area 360. For example, referring to the first row of the comment in the comment display area, the default blank jersey in front of the user's avatar is now changed to a jersey with the icon of the participant F, that is, the jersey (or referred to as a badge) of the participant F.

Alternatively, in some embodiments, the terminal device 120 displays a gift selection area in response to receiving a user selection for the gift control 364. Then, in response to the match of the participant F being displayed in the live streaming interface, the terminal device 120 displays at least a gift associated with the participant F, for example, an exclusive gift, in the gift selection area. In addition, in response to the user selection from the user for the exclusive gift, a prompt indicating that the user has sent the exclusive gift is displayed in the comment display area. For example, the terminal device 120 may perform a dual determination: if the user has selected the team F, and the participants in the ongoing match in the live streaming channel include the team F, the terminal device 120 will show the user a gift exclusive to the team F. The user may choose to send the exclusive gift, as shown in FIG. 4D, where "XXX sent an exclusive gift" is displayed in the user interface in the form of a bullet screen. The design of exclusive gifts significantly improves the user's sense of engagement. It can be understood that when the target participant scores a goal, tens of thousands of users in the live streaming channel who support the team F (i.e., selecting the team F as the target participant) send out exclusive gifts, as if placing the users in a real football stadium, cheering for the team F together.

Similar to exclusive gifts, the user may also send an emoji corresponding to the target participant. Additionally, or alternatively, in some embodiments, the terminal device 120 displays an emoji selection area in response to receiving a user selection for the emoji control 363. In response to the match of the target participant being displayed in the live streaming interface, the terminal device 120 displays at least an emoji corresponding to the target participant, for example, an exclusive emoji, in the emoji selection area. In addition, the terminal device 120 displays, in response to a user selection for the exclusive emoji, a prompt indicating that the user has sent an exclusive gift in the comment display area. It can be understood that the design of exclusive emojis, similar to exclusive gifts, significantly improves the user's sense of engagement and improves the user's enthusiasm for watching the match, which is absent in the traditional live streaming.

The live streaming interface may also display a switch control for supporting the user in reselecting a participant, for example, the control 361 in FIG. 4D. Designing the select control and the switch control as a single control 361 can make it easier for the user to change the participant, thereby improving the user experience. In response to receiving a user selection for the switch control, the terminal device 120 displays the plurality of participant icons of the plurality of participants, as shown in FIGS. 4G and 4H. It can be understood that when the team F supported by the user is continuously being scored on by the other participant during the live streaming, the user may want to change the supported team.

In some embodiments, in response to receiving a user selection for a participant icon of another participant among the plurality of participants and to resources associated with the user account being more than threshold resources, the terminal device 120 associates the user with the another participant. The terminal device 120 updates the resources associated with the user account to the resources minus the threshold resources. For example, a threshold point required to switch between the target participants is subtracted from the points in the user account.

Alternatively, in some other embodiments, the terminal device 120 displays, in response to receiving a user selection for a participant icon of another participant among the plurality of participants and to resources associated with the user account being less than threshold resources, a prompt indicating that the resources are insufficient for reselecting a participant, as shown in FIG. 4H. The terminal device 120 displays an activity of obtaining resources and a redirect control associated with the activity, wherein the redirect control is used to trigger display of a user interface for the activity. It can be understood that the design of the resources further improves the user's sense of engagement. This makes the user feel as if he or she is also a member of the match.

The activity interface and the live streaming interface are described above with reference to FIGS. 3 and 4, respectively. It can be understood that the activity interface and the live streaming interface, and even other interfaces associated with the match that have not been introduced above are interconnected. That is, as long as the user selects a target participant in one of the interfaces, the user's account is bound to that target participant, unless the user manually changes the participant. It can also be understood that, as long as the user selects the target participant, regardless of whether the user is in the live streaming interface, or even if the user is offline or not logged in the client, as long as the performance of the target participant in the match meets the predetermined condition, the resources associated with the user account will be increased.

According to embodiments of the present disclosure, the user can select the supported participant in the live streaming event (e.g., a sports match), which increases the user's enthusiasm for watching the match, thereby improving the user's sense of interaction and engagement. After the user selects the target participant, the message sent will contain elements associated with the target participant. This further enhances the interaction between users, and between users and the streamer in the live streaming channel, thereby improving the human-computer interaction efficiency, and also providing an immersive live streaming viewing experience.

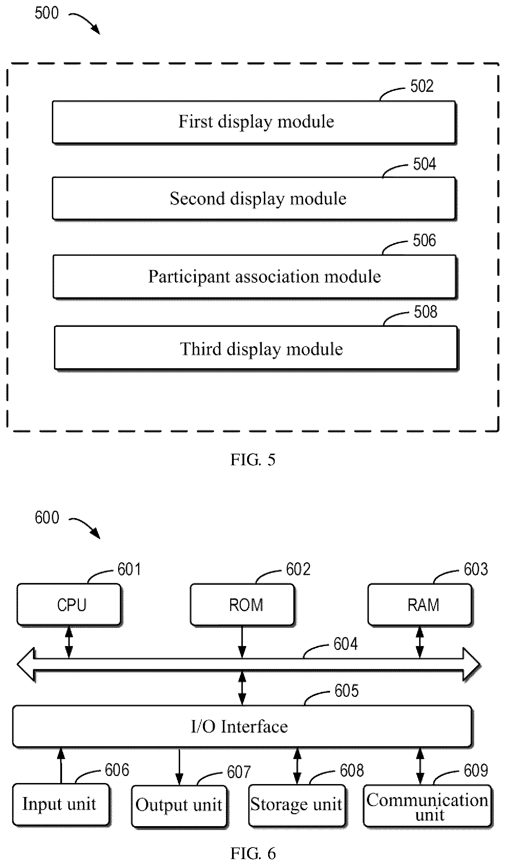

FIG. 5 is a schematic diagram of an apparatus 500 for live streaming interaction according to another embodiment of the present disclosure. The apparatus 500 includes at least a first display module 502 configured to display a select control for supporting a user in selecting a target participant from a plurality of participants, and the plurality of participants are participants associated with a live streaming event in a live streaming channel; a second display module 504 configured to display, in response to receiving a user selection for the select control, a plurality of participant icons of the plurality of participants; a participant association module 506 configured to associate a user account of the user with the target participant in response to receiving a user selection for the target participant among the plurality of participants; and a third display module 508 configured to display a user input of the user in association with the target participant in a live streaming interface.

In some embodiments, the first display module 502 may include: an initial activity interface display module configured to display an initial activity interface in response to the user having selected to enter an activity interface but not yet selected the target participant, where the initial activity interface includes a first area and a second area, the first area including an initial participant icon and the second area including the select control and benefit icons, with the initial participant icon indicating that the user has not yet selected a participant, and the benefit icons indicating benefits that the user is able to obtain after selecting a participant.

In some embodiments, the second display module 504 may include: a participant icon display module configured to display the plurality of participant icons in the second area; and a switch module configured to switch, in response to receiving a user selection for a corresponding participant icon among the plurality of participant icons, to display the corresponding participant icon in the first area.

In some embodiments, the apparatus 500 may further include: an information display module configured to display at least one of a live streaming event schedule, historical live streaming event data, or a historical video of the target participant in the second area after associating a user account of the user with the target participant.

In some embodiments, the information module may include: a live streaming module configured to display a live streaming entry control in response to determining that a live streaming event in progress in the live streaming channel is related to the target participant, and the live streaming entry control is used to trigger entry into the live streaming channel.

In some embodiments, the benefits may include at least one of the following: an icon, an emoji, a gift, or a chat channel corresponding to the target participant.

In some embodiments, the first display module 502 may include: a live streaming display module configured to display, in response to the user having selected to enter the live streaming channel, the live streaming interface to the user, where the live streaming interface includes a live streaming image display area, a comment display area, and interaction controls, where the interaction controls include the select control, and further include at least one of a comment input control, a gift control, or an emoji control.

In some embodiments, the second display module 504 may include: an icon display module configured to display, in response to receiving the user selection for the select control, the plurality of participant icons of the plurality of participants in an area of the live streaming interface other than the live streaming image display area.

In some embodiments, the third display module 508 may include: a comment display module configured to display, in response to receiving a message that is input by the user for the comment input control, an icon of the target participant in association with the message in the comment display area.

In some embodiments, the third display module 508 may include: a gift display module configured to display a gift selection area in response to receiving a user selection for the gift control; a gift display module configured to display, in response to the live streaming event displayed in the live streaming interface being related to the target participant, at least a gift corresponding to the target participant in the gift selection area; and a gift sending module configured to display, in response to a user selection for the gift, a prompt indicating that the user has sent the gift in the comment display area.

In some embodiments, the third display module 508 may include: an emoji display module configured to display an emoji selection area in response to receiving a user selection for the emoji control; an emoji display module configured to display, in response to the live streaming event displayed in the live streaming interface being related to the target participant, at least an emoji corresponding to the target participant in the emoji selection area; and an emoji sending module configured to display, in response to a user selection for the emoji, a prompt indicating that the user has sent the emoji in the comment display area.

In some embodiments, the apparatus 500 may further include: a resource module configured to increase resources associated with the user account in response to the performance of the target participant in the live streaming event meeting a predetermined condition.

In some embodiments, the apparatus 500 may further include: a switch display module configured to display a switch control for supporting the user in reselecting a participant; and a participant display module configured to display, in response to receiving a user selection for the switch control, the plurality of participant icons of the plurality of participants.

In some embodiments, the apparatus 500 may further include: a re-association module configured to associate, in response to receiving a user selection for another participant among the plurality of participants and to resources associated with the user account being more than threshold resources, the user with the another participant; and a resource updating module configured to update the resource amount associated with the user account based on the threshold resource amount.

In some embodiments, the apparatus 500 may further include: a prompt module configured to display, in response to receiving a user selection for another participant among the plurality of participants and to resources associated with the user account being less than threshold resources, a prompt indicating that the resources are insufficient for reselecting a participant; and a trigger module configured to display an activity of obtaining resources and a redirect control associated with the activity, and the redirect control is used to trigger display of a user interface for the activity.

FIG. 6 is a schematic block diagram of an example device 600 that may be used to implement the embodiments of the present disclosure. For example, the terminal device 120 as shown in FIG. 1 may be implemented by the device 600. As shown, the device 600 includes a central processing unit (CPU) 601 that may perform a variety of appropriate actions and processing in accordance with computer program instructions stored in a read-only memory (ROM) 602 or computer program instructions loaded from a storage unit 608 into a random access memory (RAM) 603. The RAM 603 may further store various programs and data required for the operation of the device 600. The CPU 601, the ROM 602, and the RAM 603 are connected to each other via a bus 604. An input/output (I/O) interface 605 is also connected to the bus 604.

A number of components in the device 600 are connected to the I/O interface 605, including: an input unit 606, such as a keyboard, or a mouse; an output unit 607, such as a display, or a speaker of various types; a storage unit 608, such as a magnetic disk, or an optical disk; and a communication unit 609, such as a network card, a modem, or a wireless communication transceiver. The communication unit 609 allows the device 600 to exchange information/data with other devices over a computer network such as the Internet and/or various telecommunication networks. It should be understood that in the present disclosure, the output unit 607 may be used to display information on real-time dynamic changes in user satisfaction, information on recognition of key factors for group or individual users of satisfaction, information on an optimization policy, information on evaluation of the effect of implementation of the policy, etc.

The processing unit 601 may be implemented by one or more processing circuits. The processing unit 601 may be configured to perform various processes and processing described above, such as the process 200. For example, in some embodiments, the process 200 may be implemented as a computer software program tangibly embodied in a machine-readable medium, such as the storage unit 608. In some embodiments, some or all of the computer programs may be loaded into and/or installed onto the device 600 via the ROM 602 and/or the communication unit 609. When the computer program is loaded into the RAM 603 and executed by the CPU 601, one or more steps in the process 200 described above may be performed.

The present disclosure may be a system, a method, and/or a computer program product. The computer program product may include a computer-readable storage medium on which computer-readable program instructions for performing various aspects of the present disclosure are carried.

The computer-readable storage medium may be a tangible device that can hold and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples of the computer-readable storage medium (a non-exhaustive list) include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coding device, a punched card or an in-groove raised structure on which instructions are for example stored, and any suitable combination thereof. The computer-readable storage medium used herein is not to be interpreted as a transient signal per se, such as a radio wave or another freely propagating electromagnetic wave, an electromagnetic wave propagating through a waveguide or another transmission medium (e.g., an optical pulse through a fibre-optic cable), or an electrical signal transmitted over a wire.

The computer-readable program instructions described herein may be downloaded from a computer-readable storage medium to each computing/processing device, or downloaded to an external computer or an external storage device over a network, such as the Internet, a local area network, a wide area network, and/or a wireless network. The network may include copper transmission cables, fibre-optic transmission, wireless transmission, routers, firewalls, switches, gateway computers, and/or edge servers. A network adapter card or network interface in each computing/processing device receives computer-readable program instructions from the network and forwards the computer-readable program instructions for storage in the computer-readable storage medium in each computing/processing device.

The computer program instructions for performing the operations of the present disclosure may be assembly instructions, instruction set architecture (ISA) instructions, machine instructions, machine-related instructions, microcode, firmware instructions, state setting data, or source code or object code written in any combination of one or more programming languages, including object-oriented programming languages, such as Smalltalk and C++, as well as conventional procedural programming languages, such as "C" language or similar programming languages. The computer-readable program instructions may be completely executed on a computer of a user, partially executed on a computer of a user, executed as an independent software package, partially executed on a computer of a user and partially executed on a remote computer, or completely executed on a remote computer or server. In the circumstance involving the remote computer, the remote computer may be connected to a computer of a user over any type of network, including a local area network (LAN) or a wide area network (WAN), or may be connected to an external computer (for example, connected over the Internet using an Internet service provider). In some embodiments, an electronic circuit, such as a programmable logic circuit, a field programmable gate array (FPGA), or a programmable logic array (PLA), is personalised by using state information of the computer-readable program instructions. The electronic circuit may execute the computer-readable program instructions to implement various aspects of the present disclosure.

Various aspects of the present disclosure have been described herein with reference to the flowchart and/or the block diagrams of the method, the apparatus (system), and the computer program product according to the embodiments of the present disclosure. It should be understood that each block of the flowchart and/or the block diagrams and a combination of blocks in the flowchart and/or the block diagrams may be implemented by computer-readable program instructions.

These computer-readable program instructions may be provided to a processing unit of a general-purpose computer, a special-purpose computer, or another programmable data processing apparatus to produce a machine, such that the instructions, when executed by the processing unit of the computer or the other programmable data processing apparatus, create an apparatus for implementing functions/actions specified in one or more blocks in the flowchart and/or the block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowchart and/or the block diagrams.

Alternatively, the computer-readable program instructions may be loaded onto a computer, another programmable data processing apparatus, or another device, such that a series of operation steps are performed on the computer, the other programmable data processing apparatus, or the other device to produce a computer-implemented process. Therefore, the instructions executed on the computer, the other programmable data processing apparatus, or the other device implement functions/actions specified in one or more blocks in the flowchart and/or the block diagrams.

The flowchart and the block diagrams in the accompanying drawings illustrate possible system architectures, functions, and operations of the system, the method, and the computer program product according to a plurality of embodiments of the present disclosure. In this regard, each block in the flowcharts or the block diagrams may represent a part of a module, a program segment, or an instruction. The part of the module, the program segment, or the instruction includes one or more executable instructions for implementing a specified logical function. In some alternative implementations, functions marked in the blocks may occur in a sequence different from that marked in the accompanying drawings. For example, two consecutive blocks may actually be executed substantially in parallel, or may sometimes be executed in a reverse order, depending on a function involved. It should also be noted that each block in the block diagrams and/or the flowcharts, and a combination of the blocks in the block diagrams and/or the flowcharts may be implemented by a dedicated hardware-based system that executes specified functions or actions, or may be implemented by a combination of dedicated hardware and computer instructions.

According to one or more embodiments of the present disclosure, the following examples are provided. Example 1. A method for live streaming interaction, including: displaying, in response to receiving a user selection for the select control, a plurality of participant icons of the plurality of participants; associating a user account of the user with the target participant in response to receiving a user selection for the target participant among the plurality of participants; and displaying a user input of the user in association with the target participant in a live streaming interface.

Example 2. The method according to example 1, wherein displaying a select control for supporting a user in selecting a participant from a plurality of participants includes: displaying an initial activity interface in response to the user having selected to enter an activity interface but not yet selected the target participant, where the initial activity interface includes a first area and a second area, the first area including an initial participant icon and the second area including the select control and benefit icons, with the initial participant icon indicating that the user has not yet selected a participant, and the benefit icons indicating benefits that the user is able to obtain after selecting a participant.

Example 3. The method according to example 2, wherein displaying, in response to receiving a user selection for the select control, a plurality of participant icons of the plurality of participants includes: displaying the plurality of participant icons in the second area; and switching, in response to receiving a user selection for a corresponding participant icon among the plurality of participant icons, to display the corresponding participant icon in the first area.

Example 4. The method according to example 2, further including: displaying at least one of a live streaming event schedule, historical live streaming event data, or a historical video of the target participant in the second area after associating a user account of the user with the target participant.

Example 5. The method according to example 4, wherein displaying a live streaming event schedule of the target participant in the second area includes: displaying a live streaming entry control in response to determining that a live streaming event in progress in the live streaming channel is related to the target participant, wherein the live streaming entry control is used to trigger entry into the live streaming channel.

Example 6. The method according to example 2, wherein the benefit includes at least one of: an icon, an emoji, a gift, or a chat channel corresponding to the target participant.

Example 7. The method according to example 1, wherein displaying a select control for supporting a user in selecting a participant from a plurality of participants includes: displaying, in response to the user having selected to enter the live streaming channel, the live streaming interface to the user, where the live streaming interface includes a live streaming image display area, a comment display area, and interaction controls, where the interaction controls include the select control, and further include at least one of a comment input control, a gift control, or an emoji control.

Example 8. The method according to example 7, wherein displaying, in response to receiving a user selection for the select control, a plurality of participant icons of the plurality of participants includes: displaying, in response to receiving the user selection for the select control, the plurality of participant icons of the plurality of participants in an area of the live streaming interface other than the live streaming image display area.

Example 9. The method according to example 8, wherein displaying a user input of the user in association with the target participant in a live streaming interface includes: displaying, in response to receiving a message that is input by the user for the comment input control, an icon of the target participant in association with the message in the comment display area.

Example 10. The method according to example 8, wherein displaying a user input of the user in association with the target participant in a live streaming interface includes: displaying a gift selection area in response to receiving a user selection for the gift control; displaying, in response to the live streaming event displayed in the live streaming interface being related to the target participant, at least a gift corresponding to the target participant in the gift selection area; and displaying, in response to a user selection for the gift, a prompt indicating that the user has sent the gift in the comment display area.

Example 11. The method according to example 8, wherein displaying a user input of the user in association with the target participant in a live streaming interface includes: displaying an emoji selection area in response to receiving a user selection for the emoji control; displaying, in response to the live streaming event displayed in the live streaming interface being related to the target participant, at least an emoji corresponding to the target participant in the emoji selection area; and displaying, in response to a user selection for the emoji, a prompt indicating that the user has sent the emoji in the comment display area.

Example 12. The method according to example 1, further including: further including: increasing a resource amount associated with the user account in response to the performance of the target participant in the live streaming event meeting a predetermined condition.

Example 13. The method according to example 1, further including: displaying a switch control for supporting the user in reselecting a participant; and displaying, in response to receiving a user selection for the switch control, the plurality of participant icons of the plurality of participants.

Example 14. The method according to example 13, further including: associating, in response to receiving a user selection for another participant among the plurality of participants and to a resource amount associated with the user account being greater than a threshold resource amount, the user with the another participant; and updating the resource amount associated with the user account based on the threshold resource amount.

Example 15. The method according to example 13, further including: displaying, in response to receiving a user selection for another participant among the plurality of participants and to a resource amount associated with the user account being less than a threshold resource amount, a prompt indicating that the resource amount is insufficient for reselecting a participant; and displaying an activity of obtaining a resource amount and a redirect control associated with the activity, wherein the redirect control is used to trigger display of a user interface for the activity.

Example 16. An apparatus for live streaming interaction, including: a first display module configured to display a select control for supporting a user in selecting a target participant from a plurality of participants, where the plurality of participants are participants associated with a live streaming event in a live streaming channel; a second display module configured to display, in response to receiving a user selection for the select control, a plurality of participant icons of the plurality of participants; a participant association module configured to associate a user account of the user with the target participant in response to receiving a user selection for the target participant among the plurality of participants; and a third display module configured to display a user input of the user in association with the target participant in a live streaming interface.

Example 17. The apparatus according to example 16, wherein the first display module includes: an initial activity interface display module configured to display an initial activity interface in response to the user having selected to enter an activity interface but not yet selected the target participant, where the initial activity interface includes a first area and a second area, the first area including an initial participant icon and the second area including the select control and benefit icons, with the initial participant icon indicating that the user has not yet selected a participant, and the benefit icons indicating benefits that the user is able to obtain after selecting a participant.

Example 18. The apparatus according to example 17, wherein the second display module includes: a participant icon display module configured to display the plurality of participant icons in the second area; and a switch module configured to switch, in response to receiving a user selection for a corresponding participant icon among the plurality of participant icons, to display the corresponding participant icon in the first area.

Example 19. The apparatus according to example 17, further including: an information display module configured to display at least one of a live streaming event schedule, historical live streaming event data, or a historical video of the target participant in the second area after associating a user account of the user with the target participant.

Example 20. The apparatus according to example 19, wherein the information module includes: a live streaming module configured to display a live streaming entry control in response to determining that a live streaming event in progress in the live streaming channel is related to the target participant, where the live streaming entry control is used to trigger entry into the live streaming channel.

Example 21. The apparatus according to example 17, wherein the benefit includes at least one of: an icon, an emoji, a gift, or a chat channel corresponding to the target participant.

Example 22. The apparatus according to example 16, wherein the first display module includes: a live streaming display module configured to display, in response to the user having selected to enter the live streaming channel, the live streaming interface to the user, where the live streaming interface includes a live streaming image display area, a comment display area, and interaction controls, where the interaction controls include the select control, and further include at least one of a comment input control, a gift control, or an emoji control.

Example 23. The apparatus according to example 22, wherein the second display module includes: an icon display module configured to display, in response to receiving the user selection for the select control, the plurality of participant icons of the plurality of participants in an area of the live streaming interface other than the live streaming image display area.

Example 24. The apparatus according to example 22, wherein the third display module includes: a comment display module configured to display, in response to receiving a message that is input by the user for the comment input control, an icon of the target participant in association with the message in the comment display area.

Example 25. The apparatus according to example 22, wherein the third display module includes: a gift display module configured to display a gift selection area in response to receiving a user selection for the gift control; a gift display module configured to display, in response to the live streaming event displayed in the live streaming interface being related to the target participant, at least a gift corresponding to the target participant in the gift selection area; and a gift sending module configured to display, in response to a user selection for the gift, a prompt indicating that the user has sent the gift in the comment display area.

Example 26. The apparatus according to example 22, wherein the third display module includes: an emoji display module configured to display an emoji selection area in response to receiving a user selection for the emoji control; an emoji display module configured to display, in response to the live streaming event displayed in the live streaming interface being related to the target participant, at least an emoji corresponding to the target participant in the emoji selection area; and an emoji sending module configured to display, in response to a user selection for the emoji, a prompt indicating that the user has sent the emoji in the comment display area.

Example 27. The apparatus according to example 16, further including: a resource amount module configured to increase a resource amount associated with the user account in response to the performance of the target participant in the live streaming event meeting a predetermined condition.

Example 28. The apparatus according to example 16, further including: a switch display module configured to display a switch control for supporting the user in reselecting a participant; and a participant display module configured to display, in response to receiving a user selection for the switch control, the plurality of participant icons of the plurality of participants.

Example 29. The apparatus according to example 28, further including: a re-association module configured to associate, in response to receiving a user selection for another participant among the plurality of participants and to a resource amount associated with the user account being greater than a threshold resource amount, the user with the another participant; and a resource amount updating module configured to update the resource amount associated with the user account based on the threshold resource amount.

Example 30. The apparatus according to example 28, further including: a prompt module configured to display, in response to receiving a user selection for another participant among the plurality of participants and to the resource amount associated with the user account being less than a threshold resource amount, a prompt indicating that the resource amount is insufficient for reselecting a participant; and a trigger module configured to display an activity of obtaining resources and a redirect control associated with the activity, where the redirect control is used to trigger display of a user interface for the activity.

Example 31. An electronic device, including: a processor; and a memory coupled to the processor, where the memory has instructions stored therein that, when executed by the processor, cause the electronic device to perform the method according to any of examples 1 to 15.

Example 32. A computer-readable storage medium having a computer program stored therein, where the program, when executed by a processor, causes the processor to perform the method according to any of examples 1 to 15.

Various embodiments of the present disclosure have been described above. The foregoing descriptions are exemplary, not exhaustive, and are not limited to the disclosed embodiments. Many modifications and variations are apparent to a person of ordinary skill in the art without departing from the scope and spirit of the described embodiments. Selection of terms used herein is intended to best explain principles of the embodiments, actual application, or technical improvements to technologies in the market, or to enable another person of ordinary skill in the art to understand the embodiments disclosed herein.

## Claims

1. A method for live streaming interaction, comprising:
displaying a select control for supporting a user in selecting a target participant from a plurality of participants, wherein the plurality of participants are participants associated with a live streaming event in a live streaming channel;
displaying, in response to receiving a user selection for the select control, a plurality of participant icons of the plurality of participants;
associating a user account of the user with the target participant in response to receiving a user selection for the target participant among the plurality of participants; and
displaying a user input of the user in association with the target participant in a live streaming interface.

2. The method according to claim 1, wherein displaying a select control for supporting a user in selecting a participant from a plurality of participants comprises:
displaying an initial activity interface in response to the user having selected to enter an activity interface but not yet selected the target participant, wherein the initial activity interface comprises a first area and a second area, the first area comprising an initial participant icon, and the second area comprising the select control and benefit icons, with the initial participant icon indicating that the user has not yet selected a participant, and the benefit icons indicating benefits that the user is able to obtain after selecting a participant.

3. The method according to claim 2, wherein displaying, in response to receiving a user selection for the select control, a plurality of participant icons of the plurality of participants comprises:
displaying the plurality of participant icons in the second area; and
switching, in response to receiving a user selection for a corresponding participant icon among the plurality of participant icons, to display the corresponding participant icon in the first area.

4. The method according to claim 2, further comprises:
displaying at least one of a live streaming event schedule, historical live streaming event data, or a historical video of the target participant in the second area after associating a user account of the user with the target participant.

5. The method according to claim 4, wherein displaying a live streaming event schedule of the target participant in the second area comprises:
displaying a live streaming entry control in response to determining that a live streaming event in progress in the live streaming channel is related to the target participant, wherein the live streaming entry control is used to trigger entry into the live streaming channel.

6. The method according to claim 2, wherein the benefit comprises at least one of:
an icon, an emoji, a gift, or a chat channel corresponding to the target participant.

7. The method according to claim 1, wherein displaying a select control for supporting a user in selecting a participant from a plurality of participants comprises:
displaying, in response to the user having selected to enter the live streaming channel, the live streaming interface to the user, wherein the live streaming interface comprises a live streaming image display area, a comment display area, and interaction controls, wherein the interaction controls comprise the select control, and further comprise at least one of a comment input control, a gift control, or an emoji control.

8. The method according to claim 7, wherein displaying, in response to receiving a user selection for the select control, a plurality of participant icons of the plurality of participants comprises:
displaying, in response to receiving the user selection for the select control, the plurality of participant icons of the plurality of participants in an area of the live streaming interface other than the live streaming image display area.

9. The method according to claim 8, wherein displaying a user input of the user in association with the target participant in a live streaming interface comprises:
displaying, in response to receiving a message that is input by the user for the comment input control, an icon of the target participant in association with the message in the comment display area.

10. The method according to claim 8, wherein displaying a user input of the user in association with the target participant in a live streaming interface comprises:
displaying a gift selection area in response to receiving a user selection for the gift control;
displaying, in response to the live streaming event displayed in the live streaming interface being related to the target participant, at least a gift corresponding to the target participant in the gift selection area; and
displaying, in response to a user selection for the gift, a prompt indicating that the user has sent the gift in the comment display area.

11. The method according to claim 8, wherein displaying a user input of the user in association with the target participant in a live streaming interface comprises:
displaying an emoji selection area in response to receiving a user selection for the emoji control;
displaying, in response to the live streaming event displayed in the live streaming interface being related to the target participant, at least an emoji corresponding to the target participant in the emoji selection area; and
displaying, in response to a user selection for the emoji, a prompt indicating that the user has sent the emoji in the comment display area.

12. The method according to claim 1, further comprises:
updating a resource amount associated with the user account in response to the performance of the target participant in the live streaming event meeting a predetermined condition.

13. The method according to claim 1, further comprising:
displaying a switch control for supporting the user in reselecting a participant; and
displaying, in response to receiving a user selection for the switch control, the plurality of participant icons of the plurality of participants.

14. The method according to claim 13, further comprises:
associating, in response to receiving a user selection for another participant among the plurality of participants and to a resource amount associated with the user account being greater than a threshold resource amount, the user with the another participant; and
updating the resource amount associated with the user account based on the threshold resource amount.

15. The method according to claim 13, further comprises:
displaying, in response to receiving a user selection for another participant among the plurality of participants and to a resource amount associated with the user account being less than a threshold resource amount, a prompt indicating that the resource amount is insufficient for reselecting a participant; and
displaying an activity of obtaining resources and a redirect control associated with the activity, wherein the redirect control is used to trigger display of a user interface for the activity.

16. An apparatus for live streaming interaction, comprising:
a first display module configured to display a select control for supporting a user in selecting a target participant from a plurality of participants, wherein the plurality of participants are participants associated with a live streaming event in a live streaming channel;
a second display module configured to display, in response to receiving a user selection for the select control, a plurality of participant icons of the plurality of participants;
a participant association module configured to associate a user account of the user with the target participant in response to receiving a user selection for the target participant among the plurality of participants; and
a third display module configured to display a user input of the user in association with the target participant in a live streaming interface.

17. An electronic device, comprising:
a processor; and
a memory coupled to the processor, wherein the memory has instructions stored therein that, when executed by the processor, cause the electronic device to perform the method according to any of claims 1 to 15.

18. A computer-readable storage medium, having a computer program stored thereon, wherein the program, when executed by a processor, causes the processor to perform the method according to any of claims 1 to 15.
